# EUROPÄISCHE PATENTSCHRIFT

(11) **EP 2 862 625 B1**
(45) Veröffentlichungstag und Bekanntmachung des Hinweises auf die Patenterteilung: **29.03.2017**
(21) Anmeldenummer: 13004985.1
(22) Anmeldetag: 18.10.2013
(51) Int. Cl.: B01F 17/56, C04B 24/10

(54) **Alkalisch behandelte invertierte Melasse als Dispergiermittel für mineralische Suspensionen**
Alkaline treated inverted molasses as a dispersant for mineral suspensions
Mélasse inversé à traitement alcalin comme agent dispersant pour des suspensions minérales

(43) Veröffentlichungstag der Anmeldung: 22.04.2015
(73) Patentinhaber: Sika Technology AG, 6340 Baar (CH)
(72) Erfinder: HAACK, Thomas, Santiago de Chile (CL); OLIVARES, Hugo, Santiago Centro (CL); GALLEGOS, Pedro, Santiago de Chile (CL)

(56) Entgegenhaltungen:
- EP-A1- 2 159 203
- EP-A1- 2 559 675
- WO-A1-2005/110941
- US-A- 3 536 507

## Beschreibung

### Technisches Geblet

Die Erfindung betrifft die Verwendung modifizierter Melasse als Dispergiermittel für mineralische Suspensionen. Weiter bezieht sich die Erfindung auf ein Verfahren zur Herstellung einer mineralischen Suspension, eine entsprechende mineralische Suspension sowie daraus erhältliche Formkörper.

### Stand der Technik

Suspensionen sind heterogene Stoffgemische, welche eine Flüssigkeit mit darin dispergierten Feststoffpartikeln umfassen. Um Suspensionen zu stabilisieren oder deren Eigenschaften gezielt zu beeinflussen, werden üblicherweise sogenannte Dispergiermittel eingesetzt.

Ein Beispiel für Suspensionen sind mit Wasser angemachte, verarbeitbare mineralische Bindemittelzusammensetzungen, z.B, Mörtel- oder Betonzusammensetzungen. Diese werden üblicherweise mit Dispergiermitteln behandelt, um die Verarbeitbarkeit zu verbessern oder den Wasserbedarf zu senken. Bekannte Dispergiermittel für mineralische Bindemittelzusammensetzungen sind unter anderem Polycarboxylatether, Lignosulfonate, Naphthalensulfonatformaldehyd-Kondensate, Saccharide und dergleichen.

Andere Beispiele für Suspension sind sogenannte Tailings oder Aufbereitungsrückstände. Dies sind feinkörnige Gesteinsrückstände in Form von Aufschlämmungen welche bei der Erzgewinnung übrigbleiben nachdem die interessierenden Erze aus dem Gestein abgetrennt wurden. Tailings werden von den Minen bzw. den Erzverarbeitungsstätten in grossen Lagerstätten (z.B. künstlich angelegte Becken) gefördert und dort gelagert. Dabei werden die Tailings in Konzentratoren bis zu 45% Feststoffgehalt angereichert um dann mit Hilfe von potenten Pumpen zu den Lagerstätten weitergeleitet. Es ist wichtig, dass diese Tailings einerseits ein gutes Fliessverhalten aufweisen um als nicht-Newton'sche Flüssigkeit gepumpt werden zu können. Andererseits sollten die Tailings nach Möglichkeit nicht zu flüssig sein, damit diese im Auffangbecken nicht über den Grenzdamm hinausfliessen. Zudem wäre sehr vorteilhaft, die Talings weiteraufzukonzentrieren zu können, um weiteres Wasser zu sparen, was insbesondere relevant ist in Regionen in welchen Wasserknappheit herrscht oder Wasser sehr teuer ist. Aufgrund der exponentiell zunehmender Viskosität der Tailings ist dies zur Zeit aber kaum möglich.

Die WO 02/083592 A1 (Betzdearborn Inc.) beschreibt in diesem Zusammenhang verschiedene Polymere, z.B. Polymethacrylate, als Viskositätsmodifikatoren für Tailings. Diese vermögen aber im Hinblick auf die vorstehend genannte Problematik nicht vollständig zu überzeugen.

Viele der heute eingesetzten Dispergiermittel basieren zudem auf Rohstoffen, die aus Erdöl gewonnen werden. Aus ökologischen und ökonomischen Gründen gewinnen Dispergiermittel auf Basis von nachwachsenden Rohstoffen oder Nebenprodukten von Industrieprozessen zunehmend an Bedeutung.

Die WO 2005/110941 A1 (Australian Industrial Additives) offenbart z.B. die Verwendung von chemisch abgebauter Melasse als Dispergier- oder als Mahlhilfsmittel,

Aus der EP 2559675 A1 ist enzymatisch invertierte Saccharose als Dispergiermittel bekannt. EP 2159203 offenbart Dispergiermittel für Betonzusammensetzungen, umfassend ein Polymer und ein Fliessmittel.

Es besteht jedoch nach wie vor Bedarf nach neuen oder alternativen Dispergiermitteln welche nach Möglichkeit in unterschiedlich zusammengesetzten mineralischen Suspensionen oder unabhängig vom jeweiligen Verwendungszweck eine gute Dispergierwirkung ergeben.

### Darstellung der Erfindung

Aufgabe der vorliegenden Erfindung ist es daher, ein Dispergiermittel zur Verwendung in mineralischen Suspensionen zur Verfügung zu stellen. Das Dispergiermittel soll insbesondere unabhängig von der jeweiligen Zusammensetzung der mineralischen Suspension wirksam sein und möglichst kostengünstig herstellbar sein. Im Besonderen soll das Dispergiermittel in mineralischen Bindemittelzusammensetzungen, z.B. in hydraulisch abbindenden Bindemittelzusammensetzungen, eine gute Dispergier- bzw. Verflüssigungswirkung entfalten, welche über längere Zeit erhalten bleibt, insbesondere ohne dabei das Aushärten der Bindemittelzusammensetzung zu stark zu verzögern. Ebenso soll das Dispergiermittel zur Verflüssigung von feinkörnigen Suspensionen, z.B. in Form von Tailings, mit möglichst hohem Feststoffgehalt geeignet sein.

Überraschenderweise wurde gefunden, dass dies durch die Verwendung von modifizierter Melasse als Dispergiermittel gemäss dem unabhängigen Hauptanspruch 1 erreicht werden kann. Kern der Erfindung ist demnach die Verwendung von modifizierter Melasse bzw. von alkalisch behandelter invertierter Melasse.

Melasse ist ein Abfall- bzw. Nebenprodukt der Zuckerherstellung aus Zuckerrohr, Zuckerrüben oder Zuckerhirse. Die gemäss der vorliegenden Erfindung modifizierte Melasse führt zu eindeutig verbesserten Dispersionseigenschaften in unterschiedlichsten mineralischen Suspensionen, wie z.B. in mineralischen Bindemittelzusammensetzungen oder in Tailings.

Bei Verwendung der modifizierten Melasse als Dispergiermittel in mineralischen Bindemittelzusammensetzungen, insbesondere in Zementzusammensetzungen, lassen sich ohne weitere Zusatzmittel Bindemittelzusammensetzungen herstellen, welche über längere Zeit eine nahezu konstante Verarbeitbarkeit aufweisen, dennoch relativ schnell aushärten.

Das erfindungsgemässe Dispersionsmittel macht zudem Gebrauch von leicht verfügbaren und günstigen Ausgangsmaterialien, welche unter anderem als Nebenoder Abfallprodukte in der Zuckerproduktion anfallen, Dies ist entsprechend ressourcenschonend.

Weitere Aspekte der vorliegenden Erfindung sind ein Verfahren zur Herstellung einer mineralischen Suspension sowie entsprechende Suspensionen, welche das erfindungsgemässe verwendete Dispersionsmittel enthalten.

Weitere vorteilhafte Ausgestaltungen der Erfindung ergeben sich aus den Unteransprüchen.

### Wege zur Ausführung der Erfindung

Gemäss einem ersten Aspekt betrifft die vorliegende Erfindung die Verwendung von modifizierter Melasse als Dispergiermittel für mineralische Suspensionen, wobei ein Gewichtsanteil an Feststoffpartikeln mit einer Partikelgrösse < 100 µm in der mineralischen Suspensionwenigstens 50 Gew.-% beträgt und die modifizierte Melasse erhältlich ist durch ein Verfahren umfassend die Schritte:
a) Invertieren von Melasse und/oder bereitstellen von invertierter Melasse
b) Umsetzung der invertierten Melasse mit Alkalien.

Schritt b) wir dabei insbesondere nach Schritt a) durchgeführt.

Der Begriff "mineralische Suspension" steht im vorliegenden Zusammenhang für eine Suspension umfassend eine Flüssigkeit, insbesondere Wasser, sowie eine Vielzahl von wenigstens teilweise darin suspendierten mineralischen Partikeln. Die Suspension kann auch als Aufschlämmung oder im Englischen als "Slurry" bezeichnet werden. Der Begriff umfasst explizit auch mit Wasser angemachte mineralische Bindemittelzusammensetzungen, z.B. Mörtel- oder Betonzusammensetzungen, welche insbesondere in fliessfähigem oder pastösem Zustand vorliegen. Die mineralische Suspension weist insbesondere einen Feststoffgehalt von wenigstens 25 Gew.-%, insbesondere wenigstens 30 Gew.-%, bevorzugt 50 - 95 Gew.-%, mit Vorteil 60 - 90 Gew.-%, speziell 70 - 85 Gew.-%, bezogen auf das Gesamtgewicht der Suspension, auf.

Melasse entsteht als Nebenerzeugnis in der Zuckerproduktion aus Zuckerrohr, Zuckerrüben und Zuckerhirse. Melasse enthält je nach Herkunft typischerweise 30 - 65 Gew.-% Saccharose. Saccharose bildet dabei insbesondere den Hauptbestandteil oder den Bestandteil mit dem grössten Gewichtsanteil der Melasse. Daneben liegen in der Melasse auch organische Säuren, Vitamine und/oder Mineralstoffe vor. Melasse ist als Neben oder Abfallprodukt in grossen Mengen verfügbar und eine günstige Quelle für die Herstellung von Dispersionsmitteln für mineralische Suspensionen.

Als besonders vorteilhaft hat sich hier Melasse aus Zuckerrohr, Zuckerrüben und/oder Zuckerhirse erwiesen, Vorzugsweise wird in der vorliegenden Erfindung Zuckerrohrmelasse verwendet. Prinzipiell kann jedoch auch andere Melasse eingesetzt werden.

Unter "Invertierung von Melasse" ist die enzymatische oder durch Säure katalysierte Spaltung oder Hydrolyse der in der Melasse vorhandenen Saccharide in die Monosaccharide Fruchtzucker (Fruktose) und Traubenzucker (Glukose) zu verstehen. Die invertierte Melasse enthält die Monosaccharide Fruktose und Glukose, insbesondere mit einem Molanteil Fruktose : Glukose von 40 : 60 - 60 : 40 oder 45 : 55 - 55 : 45, speziell zu gleichen Molanteilen.

Die in der vorliegenden Erfindung bevorzugte Invertierung ist die enzymatische Invertierung. In diesem Fall enthält die invertierte Melasse nebst den Monosacchariden insbesondere auch das verwendete Enzym und/oder dessen Fragmente.

Bei der enzymatischen Invertierung wird als Enzym insbesondere eine Invertase eingesetzt. Mit anderen Worten ist die enzymatisch invertierte Melasse insbesondere eine durch Invertase invertierte Melasse. Invertase ist mit der EC-Nummer (Enzyme Commission Number) 3.2.1.26 klassifiziert und gehört zur Kategorie der Glykosidasen. Andere Bezeichnungen für Invertase sind β-Fructofuranosidase, Saccharase oder Invertin.

Geeignete Temperaturen zur enzymatischen Invertierung von Melasse liegen insbesondere im Bereich von 20 - 80°C, bevorzugt 30 - 70°C, im Besonderen 55 - 65°C. Weiter wird die zu invertierende Melasse mit Vorteil bei einem pH von 4 - 7, insbesondere 4.5 - 6.5, invertiert. Bei derartigen Bedingungen wird ein optimaler Umsatz an Melasse mit minimalem Anteil an Enzym erreicht, was aus ökonomischen Gründen vorteilhaft ist.

Es sind aber prinzipiell auch andere Bedingungen möglich. Bei Temperaturen über 80°C und/oder pH-Werten < 3 oder > 9 besteht jedoch die Gefahr der wenigstens teilweisen Denaturierung der Enzyme, was den Anteil an unerwünschten Nebenprodukten in der invertierten Melasse unter Umständen erhöht.

Entsprechend ist die verwendete enzymatisch invertierte Melasse bevorzugt eine bei einer Temperatur von 20 - 80°C, insbesondere 30 - 70°C, im Besonderen 55 - 65°C, und/oder einem pH von 4 - 7, insbesondere 4.5 - 6,5, invertierte Melasse.

Das verwendete Enzym bzw. die Invertase weist beispielsweise eine Aktivität im Bereich von 100'000 - 300'000 S.U., bevorzugt 180'000 - 220'000 S.U., im Speziellen 200'000 S.U., auf. 1 S.U. (Sumner Unit) ist dabei definiert als diejenige Menge an Enzym, welche innerhalb von 5 Minuten bei einer Temperatur von 20°C und einem pH von 4.7 aus 6 ml einer 5.4%-igen Saccharose-Lösung 1 mg invertierte Saccharose freisetzt.

Eine Konzentration der Invertase, insbesondere mit einer Aktivität von 100'000 - 300'000 S.U., beträgt mit Vorteil 30 bis 80 ppm, vorzugsweise 40 bis 60 ppm Gewichtsanteile Invertase pro Gewichtsanteil zu invertierender Saccharose, welche in der Melasse vorhanden ist. Bei Invertasen mit geringeren Aktivitäten kann die Konzentration entsprechend erhöht und bei Invertasen mit höheren Aktivitäten entsprechend reduziert werden.

Die zu invertierende Melasse wird in Schritt a) insbesondere 0.5 bis 15 Stunden, vorzugsweise 1 bis 12 Stunden mit der Invertase inkubiert.

Die erfindungsgemässe Invertierung der Melasse kann grundsätzlich auch durch säurekatalysierte Hydrolyse erfolgen. Für die säurekatalysierte Hydrolyse wird die Lösung durch Zugabe einer Säure auf einen geeigneten pH-Wert abgesenkt. Hierzu wird der pH-Wert der Melasse, der typischerweise ca. pH 7 beträgt, durch Einrühren von z.B. Schwefelsäure (0.5 bis 5 Gew.-%, bevorzugt 1 bis 3 Gew.-%, am meisten bevorzugt 2 Gew.-% in H₂O auf einen pH-Wert von 1 bis 4, bevorzugt 2 bis 3 abgesenkt. Anschliessend wird die angesäuerte Melasse über einen Zeitraum von 2 bis 8 Stunden, bevorzugt von 3 bis 6 Stunden, am meisten bevorzugt 4.5 Stunden inkubiert.

Enzymatisch invertierte und durch säure katalysierte Melasse sind chemisch unterschiedlich. Im Vergleich zur enzymatisch invertierten Melasse enthält die durch säure katalysierte Melasse insbesondere eine Vielzahl von zusätzlichen Nebenprodukte, welche unter anderem durch die Reaktion der Säure mit den weiteren Bestandteilen der Melasse (z.B. organische Säuren, Vitamine, etc.) entstehen, Derartige Nebenprodukte finden sind in enzymatisch invertierter Melasse aufgrund der hohen Selektivität der Enzyme nur wenige oder gar keine. Die Nebenprodukte können sich bei gewissen Anwendungen unter Umständen negativ auswirken.

Vor der Invertierung oder vor Schritt a) wird die Melasse bevorzugt mit 0.2 bis 0.8, vorzugsweise auf 0.5 bis 0.7, Gewichtsteile Wasser pro Gewichtsteil Melasse verdünnt, Damit wird eine effektive Invertierung erreicht.

Die Invertierung in Schritt a) wird insbesondere so lange fortgesetzt, bis ein Umwandlungsgrad von wenigstens 50%, insbesondere wenigstens 60%, bevorzugt wenigstens 75%, weiter bevorzugt wenigstens 90%, noch weiter bevorzugt wenigstens 95%, erreicht wird. Der Umwandlungsgrad gibt dabei das Verhältnis der Menge an invertierter Saccharose zur Menge der ursprünglich in der Melasse vorhandenen Saccharose an.

Der Reaktionsverlauf der Invertierung oder der Umsatz der Saccharose kann z.B. durch Fourier-Transformations-Infrarotspektroskopie anhand der Saccharosebande bei 984 cm⁻¹ zu verfolgt werden. Daraus lässt sich direkt der Umwandlungsgrad bestimmen. Diese Technik ist dem Fachmann an sich bekannt.

Ein Gewichtsverhältnis von invertierter Saccharose zu nicht invertierter Saccharose in der invertierten Melasse beträgt mit Vorteil wenigstens 1, insbesondere wenigstens 3, im Speziellen wenigstens 5, besonders bevorzugt wenigstens 10 oder 20. Dies gilt insbesondere unabhängig von der Art und Weise der Invertierung.

Die in Schritt b) eingesetzte invertierte Melasse weist mit Vorteil einen Feststoffgehalt von 30 bis 70, vorzugsweise 40 bis 60 Gewichtsprozent, auf beträgt. Der Feststoffgehalt kann durch Verdünnen (z.B. durch Zugabe von Wasser) oder Aufkonzentrieren (z.B. durch Abdampfen von überschüssigem Wasser) in an sich bekannter Weise eingestellt werden,

Während Schritt b) wird die invertierte Melasse mit Alkalien umgesetzt. Der Ausdruck "Alkalien" steht im vorliegenden Zusammenhang insbesondere für Substanzen, welche mit Wasser alkalische Lösungen bilden oder für Substanzen, welche, falls einer wässrigen Lösung zugegeben, den pH-Wert der Lösung anzuheben vermögen.

Bei alkalischen Lösungen übersteigt die Konzentration an OH⁻-Ionen diejenige der H₃O⁺-Ionen oder der pH-Wert der alkalischen Lösung ist grösser 7.

Die Umsetzung der invertierten Melasse in Schritt b) erfolgt derart, dass wenigstens ein Teil der in der invertierten Melasse vorliegenden Monosaccharide oxidiert werden. Die Umsetzung in Schritt b) unterscheidet sich also von einer blossen pH-Wert-Veränderung durch Alkalien,

Dabei werden insbesondere Aldehydgruppen und/oder primäre endständige HO-Gruppen der in der invertierten Melasse vorliegenden reduzierenden Monosaccharide (z.B. Glukose und Fruktose) zu Säuregruppen oxidiert und in Folgereaktionen umgelagert wobei oxidierte Bruchstücke entstehen. Entsprechend enthält die alkalisch umgesetzte invertierte Melasse insbesondere Zuckersäuren oder Polyhydroxycarbonsäuren von C1 zu C6, beispielsweise Gluconsäure und Zitronensäure. Des Weiteren ist davon auszugehen, dass auch weitere Bestandteile der invertierten Melasse durch die alkalische Behandlung chemisch modifiziert werden. Entsprechend stellt alkalisch umgesetzte invertierte Melasse ein komplexes Gemisch aus unterschiedlichen Substanzen dar.

Die Umsetzung in Schritt b) wird insbesondere so lange fortgesetzt, bis ein Umwandlungsgrad von wenigstens 50%, insbesondere wenigstens 60%, bevorzugt wenigstens 75%, weiter bevorzugt wenigstens 90%, noch weiter bevorzugt wenigstens 95%, erreicht wird. Der Umwandlungsgrad gibt dabei das Gewichtsverhältnis der Menge an oxidierten Monosacchariden oder Polyhydroxycarbonsäuren zur Menge an ursprünglich in der invertierten Melasse vorhandenen Monosacchariden an.

Die Umsetzung kann beispielsweise wiederum durch Fourier-Transformations-Infrarotspektroskopie verfolgt werden.

Ein Gewichtsverhältnis von oxidierten Monosacchariden oder Polyhydroxycarbonsäuren zu nicht-oxidierten Monosacchariden in der alkalisch umgesetzten invertierten Melasse beträgt mit Vorteil wenigstens 1, insbesondere wenigstens 3, im Speziellen wenigstens 5, besonders bevorzugt wenigstens 10 oder 20.

Schritt b) erfolgt insbesondere bei einem pH von 6 -14, vorzugsweise 6-12 und am meisten bevorzugt zwischen 8 - 12 oder 9 - 12. Dieser pH wird insbesondere während 0.5 bis 5 Stunden, vorzugsweise während 1.5 bis 4 Stunden, am meisten bevorzugt während 2 bis 3 Stunden, konstant gehalten.

Insbesondere erfolgt die alkalische Umsetzung in Schritt b) durch Zugabe einer einer Base. Bevorzugt ist eine Base aus der Gruppe bestehend aus Ca(OH)₂, Mg(OH)₂, NaOH, KOH oder Mischungen davon. KOH und NaOH sind besonders bevorzugte Basen. Am meisten bevorzugt ist NaOH.

Die in Schritt b) eingesetzte Base wird vorteilhafterweise in Form einer wässrigen Lösung der Base verwendet. Die bevorzugte Konzentration der Base in der wässrigen Lösung beträgt 10 - 70 Gew.-%, insbesondere 15 - 30 Gew.-%., beispielsweise 23 Gew.-%, Dadurch lässt sich die Base gut dosieren und die Umsetzung in Schritt b), insbesondere die Temperatur und/oder der pH-Wert, einfacher kontrollieren.

Bevorzugt wird Schritt b) bei einer Temperatur von 10°C bis 90°C, vorzugsweise von 30°C bis 80°C, am meisten bevorzugt von 35°C bis 75°C oder 50 - 70°C, durchgeführt. Diese Temperatur wird insbesondere während 0.5 bis 5 Stunden, vorzugsweise während 1.5 bis 4 Stunden, am meisten bevorzugt während 2 bis 3 Stunden, konstant gehalten.

Ganz besonders bevorzugt wird in Schritt b) während 0.5 bis 5 Stunden, vorzugsweise während 1.5 bis 4 Stunden, am meisten bevorzugt während 2 bis 3 Stunden, eine Temperatur von 30°C bis 80°C, vorzugsweise von 40°C bis 70°C und am meisten bevorzugt von 55 bis 65 °C, und/oder ein pH von 6 -14, vorzugsweise von 6 -12, insbesondere 9-12 und am meisten bevorzugt von 7-11 oder 8 - 10, beibehalten.

Die Temperatur und/oder der pH während der Umsetzung in Schritt b) kann insbesondere durch die Zugabegeschwindigkeit der Base kontrolliert werden. Aufgrund der alkalischen Umsetzung der invertierten Melasse oder der Zugabe der Base in Schritt b) erhöht sich typischerweise die Temperatur und/oder der pH-Wert der Reaktionslösung.

Entsprechend wird die Base in Schritt b) mit Vorteil so zudosiert, dass die vorstehend genannten Temperaturen und/oder pH-Werte eingehalten werden. Falls hilfreich, kann die Reaktionslösung während Schritt b) zusätzlich gekühlt oder geheizt werden.

Gemäss einer bevorzugten Ausführungsform wird die modifizierte Melasse zusammen mit wenigstens einem Verflüssiger verwendet.

Der wenigstens eine Verflüssiger ist insbesondere ausgewählt aus der Gruppe bestehend Lignosulfonaten, sulfonierte Naphthalin-Formaldehyd-Kondensate, sulfonierte Melamin-Formaldehyd-Kondensate, Polycarboxylaten und/oder Polycarboxylatether (PCE),

Insbesondere weist der der Verflüssiger eine Struktur gemäss Formel (I) auf 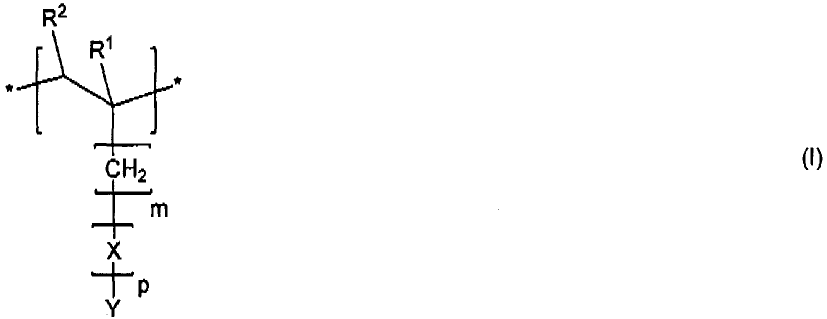 wobei
- R¹,: jeweils unabhängig voneinander, für H oder eine Alkylgruppe mit 1 bis 5 Kohlenstoffatomen steht,
- R²,: jeweils unabhängig voneinander, für H, -COOM oder eine Alkylgruppe mit 1 bis 5 Kohlenstoffatomen stehen,
- M,: unabhängig voneinander, ein Alkalimetallion, ein Erdalkalimetallion, ein zwei oder dreiwertiges Metallion, ein Ammoniumion, oder eine organische Ammoniumgruppe darstellt,
- X: für -COO-, -NH- oder Mischungen davon steht,
- m: = 0, 1 oder 2 ist,
- p: = 0 oder 1 ist,
- Y,: jeweils unabhängig voneinander, für H, M, eine C₁- bis C₂₀-Alkylgruppe, -Cycloalkylgruppe, -Alkylarylgruppe, -Hydroxyalkylgruppe oder für eine Gruppe der Formel -[AO]ₙ-R^{a} steht, wobei die genannten Gruppen unsubstituiert oder mit einer Sulfongruppe, eine Sulfatgruppe oder einer Phosphatgruppe substituiert vorliegen,
wobei A = C₂- bis C₄-Alkylen, R^{a} für H, eine C₁- bis C₂₀-Alkylgruppe, -Cyclohexylgruppe oder -Alkylarylgruppe steht und n = 1 -10 ist.

Verbindungen der Formel I sind zum Teil kommerziell erhältlich oder können z.B. durch radikalische Polymerisation von ungesättigten Monomeren der Formel II in an sich bekannter Weise hergestellt werden,

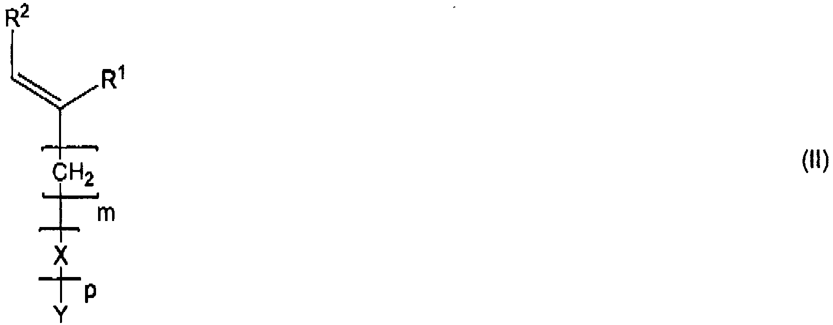

R¹, R², X, Y, m und p in Formel II sind dabei wie vorstehend im Zusammenhang mit der Struktur gemäss Formel I beschrieben, definiert.

Bevorzugt ist ein Verflüssiger gemäss Formel I wobei R¹ für H oder eine Methylgruppe steht. R² ist mit Vorteil gleich H.

Gemäss einer bevorzugten Ausführungsform steht X für -COO-. Vorteilhafterweise ist m = 0 und/oder p = 1, Y ist insbesondere gleich M oder H.

Besonders umfasst der wenigstens eine Verflüssiger eine Poly(meth)acrylsäure und/oder ein Salz davon. Der Ausdruck "Poly(meth)acrylsäure" steht dabei für ein Polymer oder ein Copolymer bestehend im Wesentlichen aus Acrylsäuremonomeren, Methacrylsäuremonomeren, Mischungen aus Acrylsäuremonomeren und Methacrylsäuremonomeren und/oder Salze dieser Monomere. Die genannten Monomere verfügen dabei insbesondere über einen Anteil von > 90 Mol-%, bevorzugt > 96 Mol.-%, speziell > 99 Mol.-%, bezogen auf sämtliche in der Poly(meth)acrylsäure vorhandenen Monomere.

Vorteilhafterweise umfasst der wenigstens eine Verflüssiger eine Polyacrylsäure und/oder ein Salz davon.

Ein Molekulargewicht des wenigstens einen Verflüssiger liegt mit Vorteil im Bereich von 1'000 - 10'000 g/mol, insbesondere 2'000 - 8'000 g/mol, bevorzugt 3'000 - 7'000, weiter bevorzugt 3'500 - 6'500 g/mol. Dies gilt insbesondere falls der Verflüssiger eine Struktur gemäss Formel I aufweist oder einer Poly(meth)acrylsäure und/oder ein Salz davon, insbesondere eine Polyacrylsäure und/oder ein Salz davon, ist. Die Molekulargewichtsbestimmung kann in an sich bekannter Weise durch GelPermeationschromatographie (GPC) mit wässrigen Elutionsmitteln erfolgen. Für die Kalibrierung wird bevorzugt ein eng kalibrierter Polyethylenglycol-Standard eingesetzt.

Bevorzugt liegt ein Gewichtsverhältnis des wenigstens einen Verflüssigers und der modifizierten Melasse im Bereich von 5:95 - 95:5, insbesondere 10:90 - 90:10, bevorzugt 30:70 - 70:30, speziell 40:60 - 60:40 oder 45;55 - 55:45.

Falls es sich bei der mineralischen Suspension beispielsweise um eine feinkörnige Suspension oder um Tailings handelt, wie sie nachstehend beschreiben werden, hat sich insbesondere die Verwendung von Kombinationen aus modifizierter Melasse und Verflüssigern mit einer Struktur gemäss Formel I oder Verflüssiger umfassend Poly(meth)acrylsäuren und/oder deren Salze, insbesondere Polyacrylsäure und/oder deren Salze, erwiesen. Besonders vorteilhaft werden dabei Verflüssiger mit den vorstehend genannten Molekulargewichten eingesetzt und die genannten Gewichtsverhältnisse eingehalten. Es wurde gefunden, dass derartige Kombinationen synergistische Effekte hervorrufen können, wodurch eine besonders effektive Dispergierung oder Viskositätsreduktion erreicht werden kann.

Im Zusammenhang mit mineralischen Suspensionen welche mineralische Bindemittel enthalten, insbesondere Mörtel- oder Betonzusammensetzungen, hat sich speziell die Verwendung von Kombinationen aus modifzierter Melasse und Verflüssigern ausgewählt aus der Gruppe bestehend aus Lignosulfonaten, sulfonierte Naphthalin-Formaldehyd-Kondensate, sulfonierte Melamin-Formaldehyd-Kondensate, und/oder Polycarboxylatether erwiesen. Insbesondere Vorteilhaft als Verflüssiger sind dabei Lignosulfonate.

Durch die Kombination von herkömmlichen Verflüssigern mit modifizierter Melasse kann beispielsweise die Menge an herkömmlichen Verflüssigern signifikant reduziert werden. Dies ist insbesondere im Falle von mangelnder Verfügbarkeit oder steigenden Preisen der herkömmlichen Verflüssiger interessant.

Die mineralische Suspension weist im Allgemeinen beispielsweise einen Feststoffgehalt von 20 - 95 Gew,-%, speziell 50 - 90 Gew.-%, insbesondere 55 - 85 Gew.-%, bevorzugt 60 - 75 Ges:%, auf.

Ein pH-Wert der mineralischen Suspension kann in einem Bereich von z.B. 4 - 14, insbesondere 4 - 11, bevorzugt 5 - 10, insbesondere 6 - 9, liegen.

Die modifizierte Melasse, gegebenenfalls zusammen mit dem wenigstens einen Verflüssiger, wird typischerweise mit einem Anteil von 0.01 - 5 Gew,-%, bevorzugt 0.1 - 1 Gew.-%, vorzugsweise 0.4 - 0.8 Gew.-%, bezogen auf den Feststoffgehalt der Suspension verwendet. Die Anteile beziehen sich dabei insbesondere auf die Gesamtmenge von modifizierter Melasse plus Verflüssiger.

Gemäss einer ersten besonders vorteilhaften Ausführungsform handelt es sich bei der mineralischen Suspension um eine feinkörnige Suspension.

Ein Gewichtsanteil an Feststoffpartikeln mit einer Partikelgrösse < 100 µm in der mineralischen Suspension beträgt dabei insbesondere wenigstens 50 Gew.-%, bevorzugt wenigstens 75 Gew.-%, im Besonderen wenigstens 90 Gew.-% oder wenigstens 95 Gew.-%, bezogen auf das Gesamtgewicht sämtlicher Feststoffe in der mineralischen Suspension.

Insbesondere beträgt ein Gewichtsanteil an Feststoffpartikeln mit einer Partikelgrösse > 10 mm in der mineralischen Suspension weniger als 10 Gew.-%, bevorzugt weniger als 5 Gew.-%. Im Besonderen weniger als 1 Gew.-%. bezogen auf das Gesamtgewicht sämtlicher Feststoffe in der mineralischen Suspension.

Ein Gewichtsanteil an Feststoffpartikeln mit einer Partikelgrösse > 1 mm ist mit Vorteil geringer als 10 Gew.-%, bevorzugt weniger als 5 Gew.-%, Im Besonderen weniger als 1 Gew,-%, bezogen auf das Gesamtgewicht sämtlicher Feststoffe in der mineralischen Suspension.

Ein Gewichtsanteil an Feststoffpartikeln mit einer Partikelgrösse < 100 µm in der mineralischen Suspension beträgt insbesondere wenigstens 50%, bevorzugt wenigstens 75%, im Besonderen wenigstens 90% oder wenigstens 95 Gew.-%, bezogen auf das Gesamtgewicht sämtlicher Feststoffe in der mineralischen Suspension.

Im Falle einer feinkörnigen Suspension, wird die modifizierte Melasse, gegebenenfalls zusammen mit dem wenigstens einen Verflüssiger, vorzugsweise mit einem Anteil von 0.01 - 1 Gew.-%, vorzugsweise 0,01 - 0.8 Gew.-% oder 0.01 - 0.6 Gew.-%, bezogen auf das Gesamtgewicht der mineralischen Suspension, verwendet. Die Anteile beziehen sich dabei insbesondere auf die Gesamtmenge von modifizierter Melasse plus Verflüssiger.

Die Partikelgrösse kann insbesondere durch Siebanalyse, z.B. mit einem Sieb mit quadratischen Öffnungen, in an sich bekannter Weise bestimmt werden.

Im Besonderen ist die mineralische Suspension im Wesentlichen frei von Zement oder von hydraulischen Bindemitteln oder von mineralischen Bindemitteln. Damit ist gemeint, dass ein Anteil derartiger Substanzen in der mineralischen Suspension kleiner als 5 Gew.-%, bevorzugt kleiner als 2 Gew.-%, insbesondere kleiner als 1 Gew,-% oder kleiner als 0.1 Gew.-% ist.

Die mineralische Suspension, insbesondere die feinkörnige Suspension, kann z.B. Tailing umfassen oder daraus bestehen. Unter dem Begriff "Tailing" sind vorliegend feinkörnige Rückstände aus der Aufbereitung von Erzen, die insbesondere in Form von wässrigen Aufschlämmungen vorliegen, zu verstehen.

Die Tailing bestehen im Wesentlichen aus feinkörnigen mineralischen Stoffen und Wasser. Die mineralischen Stoffe beinhalten insbesondere Metalle, Metalloxide, Siliziumdioxid, Schwefel, Phosphor.

Die Tailing sind bevorzugt im Wesentlichen frei von Zement oder von hydraulischen Bindemitteln oder von mineralischen Bindemitteln, wie dies vorstehend definiert ist

Ein pH-Wert der Tailing liegt bevorzugt in einem Bereich von 4 - 11, bevorzugt 5 - 10, insbesondere 6 - 9.

Gemäss einer anderen bevorzugten Ausführungsform enthält die mineralische Suspension ein mineralisches Bindemittel. In diesem Fall kann die mineralische Suspension bevorzugt auch grobkörnige Feststoffpartikel enthalten.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Unter einem "zementösen Bindemittel" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Eine "mineralische Bindemittelzusammensetzung" bezeichnet entsprechend eine Zusammensetzung enthaltend ein mineralisches Bindemittel und allenfalls weitere Komponenten, wie z.B. Aggregate, Wasser und/oder Zusatzmittel.

Insbesondere enthält das mineralische Bindemittel oder die mineralische Bindemittelzusammensetzung ein hydraulisches Bindemittel, bevorzugt Zement.

Besonders bevorzugt ist ein Zement mit einem Zementklinkeranteil von 2 35 Gew.-%. Insbesondere ist der Zement vom Typ CEM I, CEM II und/oder CEM IIIA (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew,-%, bevorzugt wenigstens 35 Gew.-%, im Speziellen wenigstens 65 Gew,-%. Gemäss einer weiteren vorteilhaften Ausführungsform besteht das mineralische Bindemittel zu ≥ 95 Gew.-% aus hydraulischem Bindemittel, insbesondere aus Zementklinker.

Es kann aber auch vorteilhaft sein, wenn das Bindemittel oder die Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5-65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Die mineralische Suspension kann zusätzlich zum mineralischen Bindemittel beispielsweise feste Aggregate, wie Kies, Sand und/oder Gesteinskörnungen enthalten. Die mineralische Suspension ist somit insbesondere eine Mörtelzusammensetzung oder eine Betonzusammensetzung.

Die modifizierte Melasse kann auch zusammen mit weiteren Substanzen, insbesondere mit Zementadditiven oder Betonzusatzmitteln, wie beispielsweise Mahlhilfsmitteln, Entschäumern, Farbstoffen, Konservierungsmitteln, Luftporenbildnern, Schwindreduzierern, weiteren Verflüssigern und/oder Korrosionsinhibitoren verwendet werden.

Im Falle einer Suspension enthaltend ein mineralisches Bindemittel, wird die modifizierte Melasse in der mineralischen Suspension vorzugsweise mit einem Anteil von 0.1 -1 Gew.-%, vorzugsweise 0.4 - 0.8 Gew,-%, bezogen auf das Gewicht des mineralischen Bindemittels verwendet.

Insbesondere beträgt ein Gewichtsverhältnis von Wasser zu mineralischem Bindemittel in der mineralischen Suspension 0.25 - 0.8, insbesondere 0.3 - 0.7, bevorzugt 0.4 - 0.6.

Durch die Verwendung der modifizierten Melasse in mineralischen Bindemitteln oder mineralischen Bindemittelzusammensetzungen wird eine sehr gute Verflüssigungswirkung erreicht, welche auch über längere Zeit aufrecht erhalten bleibt. Das Abbinden des Bindemittels wird dabei nicht wesentlich verzögert.

Die modifizierte Melasse kann entsprechend als Dispergiermittel oder Verflüssiger für ein mineralisches Bindemittel oder eine mineralische Bindemittelzusammensetzung verwendet werden.

Wie sich gezeigt hat, lässt sich bei Verwendung der modifizierten Melasse auch bei geringem Flüssigkeitsgehalt oder bei hohem Feststoffanteil der mineralischen Suspension die Fliessgrenze und/oder Viskosität der Suspension stark verringern. Dies insbesondere in feinkörnigen Suspensionen und bei geringen Dosierungen.

Entsprechend lässt sich die modifizierte Melasse, insbesondere zusammen mit wenigstens einem weiteren Verflüssiger, zur gezielten Verringerung der Fliessgrenze und/oder Viskosität von mineralischen Suspensionen, insbesondere von feinkörnigen Suspensionen oder Tailings, verwenden.

Ein weiterer Aspekt der vorliegenden Erfindung betrifft ein Verfahren zur Herstellung einer mineralischen Suspension, wobei modifizierte Melasse, wie sie vorstehen beschrieben ist, gegebenenfalls zusammen mit wenigstens einem Verflüssiger, mit mineralischen Feststoffpartikeln und einer Flüssigkeit, insbesondere Wasser, vermischt wird.

Die modifizierte Melasse, der wenigstens eine Verflüssiger sowie die mineralische Suspension sind dabei insbesondere wie vorstehen beschrieben definiert,

Die mineralischen Feststoffpartikel und die Flüssigkeit können beispielsweise als Suspension vorgemischt vorliegen und in dieser Form mit der modifizierten Melasse und gegebenenfalls mit dem wenigstens einen Verflüssiger, vermischt werden. Beispielsweise kann die modifizierte Melasse, gegebenenfalls zusammen mit dem wenigstens einen Verflüssiger, mit einer mineralischen Suspension in Form von Tailings vermischt werden.

Es ist aber auch möglich, die modifizierte Melasse, insbesondere zusammen mit dem wenigstens einen Verflüssiger, mit wenigstens einem Teil der mineralischen Feststoffpartikeln, insbesondere in trockener Form, vorzumischen und anschliessend mit dem Wasser und allfälligen weiteren Feststoffpartikeln zu vermischen.

Analog kann die modifizierte Melasse, und insbesondere der wenigstens eine Verflüssiger, mit wenigstens einem Teil des Wassers vorgemischt und anschliessend mit den Feststoffpartikel und allfälligem weiteren Wasser zu vermischen. Beispielsweise kann die modifizierte Melasse, und insbesondere der wenigstens eine Verflüssiger, beim Anmachen einer mineralischen Bindemittelzusammensetzung dem Anmachwasser zugegeben werden, welches sodann zum mineralischen Bindemittel und allfälligen weiteren Komponenten gegeben wird.

Des Weiteren schliesst die vorliegende Erfindung eine durch das vorstehend beschriebene Verfahren erhältliche Suspension mit ein.

Im Folgenden wird die vorliegende Erfindung an Hand von Ausführungsbeispielen erläutert. Aus den Ausführungsbeispielen und der Gesamtheit der Patentansprüche ergeben sich weitere vorteilhafte Ausführungsformen der vorliegenden Erfindung.

### Ausführungsbeispiele

### 1. Herstellung von modifizierter Melasse

### 1.1 Invertiertierung von Melasse

Zur Herstellung von enzymatisch invertierter Saccharose wird unbehandelte Melasse aus der Zuckerherstellung aus Rohrzucker zu invertierter Melasse umgesetzt. Unbehandelte Melasse aus Rohrzucker weist einen Saccharosegehalt von 30 - 40 Gew.-% auf.

Unbehandelte Melasse (Feststoffanteil ca, 80 Gew.-%; ph = 5.5) wird in einem heizbaren Reaktor unter Rühren mit Wasser verdünnt (0.60 Gewichtsteile Wasser pro Gewichtsteil Melasse). Anschliessend wird der Reaktor auf eine vorgegebene Temperatur von 60°C eingestellt und 50 ppm (Gewichtsteile, bezogen auf Saccharose) Invertase (Aktivität: 200'000 S.U.; erhältlich z.B. bei BioCat GmbH Deutschland; gelöst in 500 ppm Wasser) zugesetzt. Das so erhaltene Reaktionsgemisch wird sodann 8 Stunden bei der vorgegebenen Temperatur gehalten, wodurch mindestens 95% der in der Melasse ursprünglich vorhandenen Saccharose zu invertierter Saccharose umgewandelt werden. Der Reaktionsverlauf kann durch Fourier-Transformations-Infrarotspektroskopie anhand der SaccharoseBande bei 984 cm⁻¹ verfolgt werden. Erhalten wird eine Flüssigkeit mit im Wesentlichen homogener Konsistenz mit einem Feststoffgehalt von 49 Gew.-% und einem pH von 5.3, welche im Folgenden als invertierte Melasse IM bezeichnet wird.

### 1.2 Umsetzen der invertierten Melasse mit Alkalien

Zur so invertierten Melasse IM wird anschliessend über einen Zeitraum von ca. 1 Stunden portionenweise Natronlauge (50 Gew.-% NaOH in Wasser) zugegeben. Durch die Zugabe der Natronlauge erhöhen sich pH und Temperatur (aufgrund exothermer Reaktionen). Die Zugabe erfolgte dabei so, dass der pH der Reaktionslösung durchwegs im Bereich von 6.9 -12.3 liegt und die Temperatur der Reaktionslösung im Bereich von 20 - 77°C liegt. Dabei wird der pH durch die Zugabegeschwindigkeit der Natronlauge während 2.5 h in einem Bereich von 9.7 - 10.4 konstant gehalten. Ebenso wurde die Temperatur während 2.5 h in einem Bereich von 59 - 64°C konstant gehalten. Dabei wird ein Umwandlungsgrad von wenigstens 95% erreicht. Mit anderen Worten werden wenigsten 95% ursprünglich in der invertierten Melasse vorhandenen Monosaccharide umgesetzt. Der Reaktionsverlauf wird durch Fourier-Transformations-Infrarotspektroskopie anhand der Carboxylat-Bande bei 1580 cm⁻¹ verfolgt.

Erhalten wird eine Flüssigkeit mit im Wesentlichen homogener Konsistenz, welche im Folgenden als modifzierte Melasse oder alkalisch umgesetzte invertierte Melasse DM bezeichnet wird.

### 2. Herstellung von modifizierter Glucose (Vergleichsversuch)

Zur Herstellung von Vergleichsproben wurde Glucose einer alkalischen Behandlung unterzogen. Konkret wurde einer wässrige Glucoselösung (50 Gew.-% Glucose in Wasser) portionenweise verdünnte Natronlauge (23 Gew.-% NaOH in Wasser) zugegeben. Dabei wurde im Wesentlichen wie unter Kapitel 1.2 beschrieben vorgegangen.

Erhalten wurde eine Lösung enthalten ca. 38,5 Gew.-% Carbonsäuren oder Phenole und < 0.4% Glucose, welche im Folgenden als modifizierte Glucose DG bezeichnet wird. Die modifizierte Glucose DG verfügte über einen Feststoffanteil von ca. 64.8 Gew.-% und einen pH-Wert von 8.9.

### 3. Funktionstests in mineralische Bindemitteln

Die Wirksamkeit der erfindungsgemäss modifizierten Melasse wurde in Zementpasten getestet.

Die Zementpaste wurde hergestellt, indem 100 g Zement (Bio Bio AR; Typ CEM I; erhältlich bei Cementos Bio Bio S.A, Chile), 0.6 g des jeweiligen in Tabelle 1 angegebenen Dispergiermittels **(DM, IM, DG** oder Vixil) und 55 g Wasser 4 Minuten mit einem mechanischen Mischer homogen vermischt wurden. Um die Vergleichbarkeit zu gewährleisten, wurden alle Dispergiermittel auf einen Feststoffgehalt von 40 Gew.-% verdünnt.

Zur Bestimmung der Wirksamkeit der Dispergiermittel wurde das Setzmass der Zementpasten unmittelbar nach dem Anmachen (= Setzmass nach 0 Minuten), sowie nach 30 Minuten und nach 60 Minuten gemäss BS EN 12350-2 gemessen.

Ebenfalls wurde der Temperaturverlauf der Zementpasten zur Kontrolle der Hydratation bzw. des Abbindeverhaltens der Zementpasten nach dem Anmachen aufgezeichnet und die Zeit (tₘₐₓ) bis zum Auftreten des globalen Temperaturmaximums bestimmt.

Tabelle 1 gibt einen Überblick über die durchgeführten Versuche und Resultate.

**Tabelle 1**

| **Dispergiermittel** | **tₘₐₓ [h:mm]** | **Setzmass [mm]** | | |
|---|---|---|---|---|
| | | nach 0 min. | nach 30 min. | nach 60 min. |
| **DM ^{(modifizierte Melasse)}** | 9:37 | 177 | 139 | 139 |
| **IM ^{(Invertierte Melasse)}** | 12:40 | 170 | 130 | 120 |
| **DG ^{(modifizierte Glucose)}** | 12:01 | 175 | 138 | 127 |
| **Vixil*** | 10:07 | 179 | 133 | 147 |

| | | | | |
|---|---|---|---|---|
| * = Natrium-Lignosulphonat (erhältilch bei Booregaard) | | | | |

Aus Tabelle 1 ist ersichtlich, dass modifizierte Melasse **DM** eine mit Lignosulfonat (Vixil) vergleichbare Verflüssigungswirkung aufweist Verflüssigungswirkung aufweist, zugleich aber klar weniger stark verzögert als das Lignosulphonat.

Invertierte Melasse **(IM)** als auch modifizierte Glucose **DG** rufen insbesondere eine signifikant stärkere Verzögerung hervor als modifizierte Melasse **DM.**

Die erfindungsgemäss modifizierte Melasse ist daher ein geeignetes und vorteilhaftes Dispergiermittel für mineralische Bindemittelzusammensetzungen.

### 4. Funktionstests mit Tailings

Die Wirksamkeit der erfindungsgemäss modifizierten Melasse wurde des Weiteren in Tailings getestet.

### 4.1 Tailings

**Eingesetzte Tailings:**

| | |
|---|---|
| Tailing MEL: | Mineria Escondida Ltd. (Chile): 63.5 Gew.-% Feststoffgehalt; > 99 Gew.-% der Partikel weisen eine Partikelgrösse < 100 µm auf |
| | (bezogen auf das Gesamtgewicht sämtlicher im Tailing vorhandener Feststoffe). |
| Tailing DSAL: | Codelco, División Salvador; pH 8.4, 66.83 Gew.-% Feststoffgehalt; > 99 Gew.-% der Partikel weisen eine Partikelgrösse < 100 µm auf (bezogen auf das Gesamtgewicht sämtlicher im Tailing vorhandener Feststoffe). |

### 4.3 Dispergiermittel

Zusätzlich zur modifizierten Melasse **DM** und der invertierten Melasse **IM,** wurden die folgenden Dispergiermittel eingesetzt:

| **Abkürzung** | **Substanz** |
|---|---|
| **M** | unbehandelte Melasse wie in Kapitel 1.1 beschrieben |
| **PAA** | Polyacrylsäure mit einem Molekulargewicht von 4'500 g/mol |
| **PCE** | Polycarboxylatether; Sika ViscoCrete 225 (erhältlich bei Sika Deutschland) |

### 4.2 Rheologiemessungen

Tailings können als sogenannte Bingham-Körper betrachtet werden, welche im Gegensatz zu Newton'schen Flüssigkeiten unter Krafteinwirkung erst ab einer bestimmten Scherspannung τ₀ [Pa] (auch Fliessgrenze genannt) zu fliessen beginnen. Für die Schubspannung τ [Pa] gilt dabei folgender Zusammenhang: τ = τ₀ + η x γ'. Die Schubspannung τ hängt also von der Scherspannung τ₀ und der Viskosität η [Pa·s] des Binhgam-Körpers sowie der Scherrate γ' [s⁻¹] ab.

Die Rheologiemessungen an den Tailings wurden mit einem Gerät vom Typ Schleibinger Viskomat NT (Schleibinger Geräte, Deutschland) durchgeführt. Dabei wird ein rotierendes Messpaddel (= Scherkörper) in die zu untersuchende Probe eingetaucht. Das Gerät misst nun das Drehmoment T, welches in Abhängigkeit der Umdrehungsgeschwindigkeit und dem Fliessverhalten der Probe auf das Messpaddel übertragen wird. Das gemessene Drehmoment T kann dabei als proportional zur Schubspannung τ betrachtet werden.

Die Messung erfolgte analog dem im Fachgebiet der Tailings weltweit anerkannten Vane-Test. Dabei wird ein spezieller Scherkörper (Messpaddel) in Form von zwei senkrecht zueinander stehenden und um ihre Längsachsen rotierbaren rechteckigen Platten verwendet. Konkret wurden jeweils 700 g der Tailings mit einer Scherrate von 1 Umdrehung pro Minute getestet und der zeitliche Verlauf des Drehmoments aufgezeichnet. Das dabei auftretende Maximum im Drehmoment Tₘₐₓ kann als proportional zur Schubspannung τ betrachtet werden,

Es wurde jeweils eine Messung der reinen Tailings (ohne Dispergiermittel) sowie eine entsprechende Messungen mit zugegebenen Dispergiermittel bei vorgegebenen Konzentrationen durchgeführt. Die relative Änderung des Drehmoments (= T_{max (mit Dispergiermittel)}/ T_{max(ohne Diapargiarmittel)}) wird als Mass für die Wirkung des Dispergiermittels betrachtet. Bei einer Abnahme des Drehmoments wird die Fliessfähigkeit und/oder Pumpbarkeit der Tailings verbessert. Bei einer Zunahme entsprechend verschlechtert.

### 4,4 Resultate

In den folgenden Tabellen ist in der Spalte "Dosierung" die zugesetzte Menge an Dispergiermittel angegeben. Der Wert gibt jeweils den Feststoffanteil des jeweiligen Dispergiermittels oder der Wirksubstanz des jeweiligen Dispergiermittels bezogen auf das Gesamtgewicht der Tailings an.

In Tabelle 2 sind die Resultate der Rheologiemessungen bei Verwendung von modifzierter Melasse DM, invertierter Melasse IM und unbehandelter Melasse M als Dispergiermittel in Tailings von Typ MEL gezeigt.

**Tabelle 2**

| **Exp.** | **Dispergiermittel** | **Dosierung [Gew.-%]** | **Reduktion Drehmoment T [%]** |
|---|---|---|---|
| **R1** | - | - | 0 |
| **A1** | **DM** | 0.1 | 20.1 |
| **A2** | | 0,5 | 44.0 |
| **A3** | | 1.0 | 59.4 |
| **A4** | | 2.0 | 75,6 |
| **B1** | **IM** | 0.1 | 12.5 |
| **B2** | | 0.5 | 32.6 |
| **B3** | | 1.0 | 46.4 |
| **B4** | | 2.0 | 62,9 |
| **C1** | **M** | 0.1 | 11.0 |
| **C2** | | 0.5 | 28.7 |
| **C3** | | 1.0 | 42.2 |
| **C4** | | 2.0 | 59.1 |

Tabelle 2 ist zu entnehmen, dass die erfindungsgemäss modifizierte Melasse **DM** bei allen Konzentrationen eine stärkere Reduktion des gemessenen Drehmoments T hervorruft als die unbehandelte Melasse **M** oder die lediglich invertierte Melasse **IM,** Die Fliessfähigkeit und/oder Pumpbarkeit der Tailings kann durch die modifizierte Melasse **DM** also am besten gesteigert werden.

Tabelle 3 zeigt einen Vergleich der Dispergierwirkung von modifzierter Melasse **DM, PAA** und **PCE** in Tailings von Typ DSAL.

**Tabelle 3**

| **Exp.** | **Dispergiermittel** | **dosierung [Gew.-%]** | **Reduktion Drehmoment T [%]** |
|---|---|---|---|
| **R2** | - | - | 0 |
| **D1** | **DM** | 0.1 | 32.7 |
| **D2** | | 0,5 | 68.7 |
| **D3** | | 1.0 | 86.8 |
| **E1** | **PAA** | 0.1 | 67.0 |
| **E2** | | 0.5 | 73.9 |
| **E3** | | 1.0 | 74.1 |
| **F1** | **PCE** | 0.1 | -3.1 |
| **F2** | | 0.5 | 49.2 |
| **F3** | | 1.0 | 96.7 |

Dabei fällt auf, dass bei geringen Dosierungen (s 0.5 Gew.-%) **PAA** am effektivsten ist und das **PCE** überraschenderweise am schlechtesten abschneidet. Die Wirkung von **DM** liegt dazwischen, wobei **DM** aber bereits bei einer Dosierung von 0.5 Gew.-% nahezu gleich gut wirkt wie **PAA.** Das **PCE** ist bei 0.5 Gew.-% jedoch immer noch weit weniger effektiv als **PAA** und **DM.** Bei einer Dosierung von 1.0 Gew.-% entfaltet nun das PCE die beste Wirkung, gefolgt von **DM** und **PAA. DM** stellt folglich ein besonders vorteilhaftes Dispergiermittel dar, da es sowohl bei geringen als auch bei höheren Dosierungen die Fliessfähigkeit signifikant zu verbessern vermag und entsprechend gut dosierbar ist.

Tabelle 4 zeigt einen weiteren Vergleich der Dispergierwirkung von modifzierter Melasse **DM, PAA** und Mischungen aus **DM/PAA, IM/PAA** sowie **M/PAA** in Tailings von Typ MEL.

Bei den Mischungen wurden jeweils gleiche Gewichtsanteile der beiden Mischungskomponenten eingesetzt. Bei Experiment I1 wurde beispielsweise 0.05 Gew.-% **DM** und 0.05 Gew,% **PAA** verwendet. Die Gesamtdosierung der Dispergiermittel in Experiment I1 entspricht folglich der Summe der beiden Dosierungen und ist gleich 0.1 Gew.-%. Dies gilt analog auch für die anderen Experimente mit Dispergiermittel in Form von Mischungen.

**Tabelle 4**

| **Exp.** | **Dispergiermittel** | **Dosierung [Gew.-%]** | **Reduktion Drehmoment T [%]** |
|---|---|---|---|
| **R3** | - | - | 0 |
| **G1** | **DM** | 0.1 | 20.1 |
| **G2** | | 0.5 | 44.0 |
| **G3** | | 1.0 | 59.4 |
| **G4** | | 2.0 | 75.6 |
| **H1** | **PAA** | 0.1 | 44.0 |
| **H2** | | 0.5 | 48,1 |
| **H3** | | 1.0 | 55.6 |
| **H4** | | 2,0 | 63,5 |
| **I1** | Mischung aus **DM** | 0.05 **DM** / 0.05 **PAA** | 43.7 |
| **I2** | und **PAA** | 0.25 **DM** / 0.25 **PAA** | 53.7 |
| **I3** | | 0.5 **DM** / 0.5 **PAA** | 58.9 |
| **I4** | | 1 **DM/** 1 **PAA** | 84,8 |
| **J1** | Mischung aus **IM** und **PAA** | 0,05 **IM** / 0.05 **PAA** | 33.3 |
| **J2** | | 0.25 **IM** / 0.25 **PAA** | 56.8 |
| **J3** | | 0.5 **IM** / 0.5 **PAA** | 59.0 |
| **J4** | | 1 **IM** / 1 **PAA** | 75.2 |
| **K1** | Mischung aus **M** und **PAA** | 0.05 **M** / 0.05 **PAA** | 34.8 |
| **K2** | | 0.25 **M** / 0.25 **PAA** | 56.7 |
| **K3** | | 0.5 **M** / 0,5 **PAA** | 63.1 |
| **K4** | | 1 **M** / 1 **PAA** | 75.1 |

Aus Tabelle 4 ist ersichtlich, dass **DM** und **PAA** in reiner Form ein ähnliches Verhalten zeigen, wie bereits im Zusammenhang mit Tabelle 3 diskutiert. Interessant aber insbesondere die Verwendung von Mischungen aus **DM** und **PAA:** Bei einer Gesamtdosierung von 0.1 Gew.-% vermag die Mischung aus **DM** und **PAA** das Drehmoment nahezu gleich gut zu reduzieren, wie die gleiche Menge **PAA** alleine (vgl. Experiment 11 gegenüber Experiment **H1).** Bei Gesamtdosierungen von 0.5 und 2.0 Gew.-% sind die Drehmomentreduktionen sogar noch besser als mit den gleichen Mengen an Einzelsubstanzen erreichbar (vgl. Experiment **I2** gegenüber Experiment **G2** und H2 bzw. Experiment **I4** gegenüber Experiment **G4** und **H4).** Dies ist überraschend, da bei Mischungen eher ein Durchschnittswert der Wirkungen der Einzelkomponenten zu erwarten gewesen wäre. **DM** und **PAA** wirken somit funktional zusammen bzw. rufen einen synergistischen Effekt hervor.

Ein Vergleich der Mischungen auf Basis von **DM/PAA** mit **IM/PAA** oder **M/PAA,** zeigt zudem, dass die Mischung **DM/PAA** insbesondere bei den besonders interessanten Dosierungen im Bereich von < 0.5 Gew.-% die beste Wirkung von allen Mischungen entfalten.

Die vorstehend gezeigten Ausführungsbeispiele dienen lediglich als illustrative Beispiele, welche im Rahmen der Erfindung beliebig abgewandelt werden können.

Insbesondere können die oben erwähnten Zementpasten z.B. zusätzlich Aggregate, Füller und/oder Betonzusatzmittel enthalten. Dabei kann es sich speziell um Mörteloder Betonzusammensetzungen handeln.

Ebenso können beispielsweise in den im Zusammenhang mit Tabelle 4 beschriebenen Mischungen anstelle von oder zusätzlich zu **PAA** Verbindungen gemäss vorstehend beschriebener Formel (I) eingesetzt werden.

Auch ist es möglich, andere mineralische Suspensionen als die beschriebenen Tailings einzusetzen, welche z.B. einen geringeren oder einen höheren Feststoffgehalt aufweisen, Ebenso können die mineralischen Suspensionen grobkörnigere Partikel enthalten.

## Patentansprüche

1. Verwendung von modifizierter Melasse als Dispergiermittel für mineralische Suspensionen, wobei ein Gewichtsanteil an Feststoffpartikeln mit einer Partikelgrösse < 100 µm in der mineralischen Suspension wenigstens 50 Gew.-%, beträgt und wobei die modifizierte Melasse erhältlich ist durch ein Verfahren umfassend die Schritte:
a) Invertieren von Melasse und/oder bereitstellen von invertierter Melasse
b) Umsetzung der invertierten Melasse mit Alkalien.

2. Verwendung nach Anspruch 1, **dadurch gekennzeichnet, dass** die Invertierung der Melasse in Schritt a) enzymatisch, insbesondere durch eine Invertase, erfolgt.

3. Verwendung nach wenigstens einem der Ansprüche 1 - 2, **dadurch gekennzeichnet, dass** die alkalische Behandlung in Schritt b) durch eine Base aus der Gruppe bestehend aus Ca(OH)₂, Mg(OH)₂, NaOH, KOH oder Mischungen davon erfolgt, wobei KOH und NaOH bevorzugte Basen sind, und am meisten bevorzugt NaOH ist.

4. Verwendung nach wenigstens einem der Ansprüche 1 - 3, **dadurch gekennzeichnet, dass** Schritt b) bei einer Temperatur von 10°C bis 90°C, vorzugsweise von 30°C bis 80°C und am meisten bevorzugt von 35°C bis 75°C durchgeführt wird.

5. Verwendung nach wenigstens einem der Ansprüche 1 - 4, **dadurch gekennzeichnet, dass** in Schritt b) während 0.5 bis 5 Stunden, vorzugsweise während 1.5 bis 4 Stunden, am meisten bevorzugt während 2 bis 3 Stunden, eine Temperatur von 30°C bis 80°C, vorzugsweise von 40°C bis 70°C und am meisten bevorzugt von 55°C bis 65°C, und ein pH von 6 - 14, vorzugsweise 6 - 12 und am meisten bevorzugt 7 - 11 oder 8 - 10, beibehalten wird.

6. Verwendung nach wenigstens einem der Ansprüche 1 - 5, **dadurch gekennzeichnet, dass** die modifizierte Melasse zusammen mit wenigstens einem Verflüssiger verwendet wird, wobei der wenigstens eine Verflüssiger insbesondere eine Struktur gemäss Formel (I) aufweist 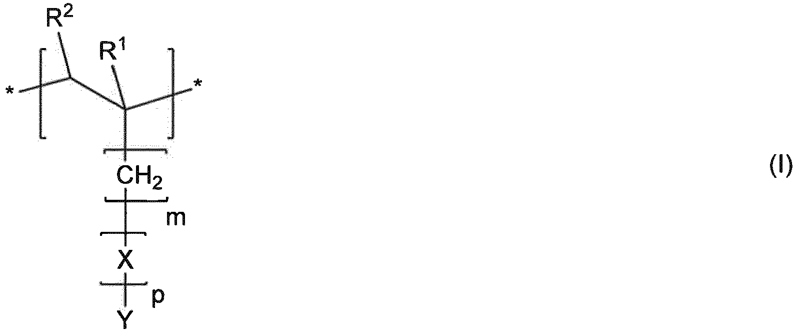 wobei
R¹, jeweils unabhängig voneinander, für H oder eine Alkylgruppe mit 1 bis 5 Kohlenstoffatomen steht,
R², jeweils unabhängig voneinander, für H, -COOM oder eine Alkylgruppe mit 1 bis 5 Kohlenstoffatomen stehen,
M, unabhängig voneinander, ein Alkalimetallion, ein
Erdalkalimetallion, ein zwei oder dreiwertiges Metallion, ein Ammoniumion, oder eine organische Ammoniumgruppe darstellt,
X für -COO-, -NH- oder Mischungen davon steht,
m = 0, 1 oder 2 ist,
p = 0 oder 1 ist,
Y, jeweils unabhängig voneinander, für H, M, eine C₁- bis C₂₀-Alkylgruppe, -Cycloalkylgruppe, -Alkylarylgruppe, -Hydroxyalkylgruppe oder für eine Gruppe der Formel -[AO]ₙ-R^{a} steht, wobei die genannten Gruppen unsubstituiert oder mit einer Sulfongruppe, eine Sulfatgruppe oder einer Phosphatgruppe substituiert vorliegen,
wobei A = C₂- bis C₄-Alkylen, R^{a} für H, eine C₁- bis C₂₀-Alkylgruppe, -Cyclohexylgruppe oder -Alkylarylgruppe steht und n = 1 - 10 ist.

7. Verwendung nach Anspruch 6, **dadurch gekennzeichnet, dass** der wenigstens eine Verflüssiger eine Poly(meth)acrylsäure und/oder ein Salz davon umfasst, insbesondere Polyacrylsäure und/oder ein Polyacrylsäuresalz.

8. Verwendung nach wenigstens einem der Ansprüche 1 - 7, **dadurch gekennzeichnet, dass** die modifizierte Melasse, gegebenenfalls zusammen mit dem wenigstens einen Verflüssiger, mit einem Anteil von 0.01 - 5 Gew.-%, bevorzugt 0.1 - 1 Gew.-%, im Besonderen 0.2 - 0.9 Gew.-%, vorzugsweise 0.4 - 0.8 Gew.-%, bezogen auf den Feststoffgehalt der mineralischen Suspension, verwendet wird.

9. Verwendung nach wenigstens einem der Ansprüche 1 bis 8, **dadurch gekennzeichnet, dass** ein Gewichtsanteil an Feststoffpartikeln mit einer Partikelgrösse < 100 µm in der mineralischen Suspension wenigstens 75 Gew.-%, im Besonderen wenigstens 90 Gew.-% oder wenigstens 95 Gew.-%, beträgt und/oder dass ein Gewichtsanteil an Feststoffpartikeln mit einer Partikelgrösse > 10 mm in der mineralischen Suspension weniger als 10 Gew.-%, bevorzugt weniger als 5 Gew.-%, im Besonderen weniger als 1 Gew.-%, beträgt, jeweils bezogen auf das Gesamtgewicht sämtlicher Feststoffe in der mineralischen Suspension.

10. Verwendung gemäss Anspruch 7 und 9.

11. Verwendung nach Anspruch 9 oder 10, **dadurch gekennzeichnet, dass** die modifizierte Melasse, gegebenenfalls zusammen mit dem wenigstens einen Verflüssiger, mit einem Anteil von 0.01 - 0.8 Gew.-% oder 0.01 - 0.6 Gew.-%, bezogen auf das Gesamtgewicht der mineralischen Suspension, verwendet wird.

12. Verwendung nach wenigstens einem der Ansprüche 1 - 11, **dadurch gekennzeichnet, dass** die mineralische Suspension ein mineralisches Bindemittel enthält, wobei die mineralische Suspension bevorzugt eine Mörtelzusammensetzung oder eine Betonzusammensetzung ist.

13. Verfahren zur Herstellung einer mineralischen Suspension, wobei modifizierte Melasse, wie sie in einem der Ansprüche 1 -12 beschrieben ist, und optional ein Verflüssiger wie er in einem der Ansprüche 6 oder 7 beschrieben ist, mit mineralischen Feststoffpartikeln und einer Flüssigkeit, insbesondere Wasser, vermischt wird, so dass ein Gewichtsanteil an Feststoffpartikeln mit einer Partikelgrösse < 100 µm in der mineralischen Suspension wenigstens 50 Gew.-% beträgt.

14. Mineralische Suspension erhältlich durch ein Verfahren nach Anspruch 13.

15. Formkörper, erhältlich durch Aushärten einer mineralischen Suspension nach Anspruch 14, wobei die mineralische Suspension mit Wasser angemachtes mineralisches Bindemittel enthält.

## Claims

1. Use of modified molasses as dispersants for mineral suspensions, wherein an amount by weight of solid particles having a particle size < 100 µm in the mineral suspension is at least 50% by weight and wherein the modified molasses is obtainable by a method comprising the steps:
a) inverting molasses and/or providing inverted molasses,
b) reacting the inverted molasses with alkalis.

2. Use according to Claim 1, **characterized in that** the inverting of the molasses in step a) takes place enzymatically, in particular by means of an invertase.

3. Use according to at least one of Claims 1 to 2, **characterized in that** the alkaline treatment in step b) takes place by means of a base from the group consisting of Ca(OH)₂, Mg(OH)₂, NaOH, KOH or mixtures thereof, wherein KOH and NaOH are preferred bases, and NaOH is most preferred.

4. Use according to at least one of Claims 1 to 3, **characterized in that** step b) is carried out at a temperature of from 10°C to 90°C, preferably from 30°C to 80°C and most preferably from 35°C to 75°C.

5. Use according to at least one of Claims 1 to 4, **characterized in that**, in step b), a temperature of from 30°C to 80°C, preferably from 40°C to 70°C and most preferably from 55°C to 65°C, and a pH of from 6 to 14, preferably from 6 to 12 and most preferably from 7 to 11 or from 8 to 10, is maintained for from 0.5 to 5 hours, preferably for from 1.5 to 4 hours, most preferably for from 2 to 3 hours.

6. Use according to at least one of Claims 1 to 5, **characterized in that** the modified molasses is used together with at least one liquefier, wherein the at least one liquefier has in particular a structure according to formula (I) 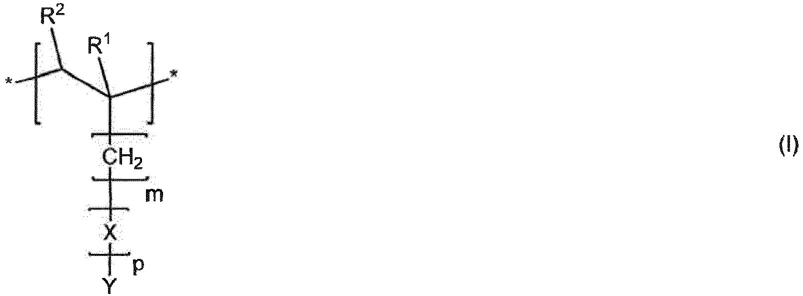 wherein
R¹, independently of one another, represents H or an alkyl group having from 1 to 5 carbon atoms,
R², independently of one another, represents H, -COOM, or an alkyl group having from 1 to 5 carbon atoms,
M, independently of one another, represents an alkali metal ion, an alkaline earth metal ion, a di- or tri-valent metal ion, an ammonium ion, or an organic ammonium group,
X represents -COO-, -NH- or mixtures thereof,
m = 0, 1 or 2,
p = 0 or 1,
Y, independently of one another, represents H, M, a C₁- to C₂₀-alkyl group, -cycloalkyl group, -alkylaryl group, -hydroxyalkyl group, or a group of the formula -[AO]ₙ-R^{a}, wherein the mentioned groups are unsubstituted or substituted by a sulfone group, a sulfate group or by a phosphate group,
wherein A = C₂- to C₄-alkylene, R^{a} represents H, a C₁- to C₂₀-alkyl group, -cyclohexyl group or -alkylaryl group, and n = 1-10.

7. Use according to Claim 6, **characterized in that** the at least one liquefier includes a poly(meth)acrylic acid and/or a salt thereof, in particular polyacrylic acid and/or a polyacrylic acid salt.

8. Use according to at least one of Claims 1 to 7, **characterized in that** the modified molasses, optionally together with the at least one liquefier, is used in an amount of from 0.01 to 5% by weight, preferably from 0.1 to 1% by weight, in particular from 0.2 to 0.9% by weight, especially from 0.4 to 0.8% by weight, based on the solids content of the mineral suspension.

9. Use according to at least one of Claims 1 to 8, **characterized in that** the amount by weight of solid particles having a particle size < 100 µm in the mineral suspension is at least 75% by weight, in particular at least 90% by weight or at least 95% by weight, and/or **in that** the amount by weight of solid particles having a particle size > 10 mm in the mineral suspension is less than 10% by weight, preferably less than 5% by weight, in particular less than 1% by weight, in each case based on the total weight of all the solids in the mineral suspension.

10. Use according to Claim 7 and 9.

11. Use according to Claim 9 or 10, **characterized in that** the modified molasses, optionally together with the at least one liquefier, is used in an amount of from 0.01 to 0.8% by weight or from 0.01 to 0.6% by weight, based on the total weight of the mineral suspension.

12. Use according to at least one of Claims 1 to 11, **characterized in that** the mineral suspension comprises a mineral binder, wherein the mineral suspension is preferably a mortar composition or a concrete composition.

13. Method for producing a mineral suspension, wherein modified molasses, as described in one of Claims 1 to 12, and optionally a liquefier as described in one of Claims 6 or 7 is mixed with mineral solid particles and a liquid, in particular water, so that an amount by weight of solid particles having a particle size < 100 µm in the mineral suspension is at least 50% by weight.

14. Mineral suspension obtainable by a method according to Claim 13.

15. Molded body obtainable by hardening a mineral suspension according to Claim 14, wherein the mineral suspension comprises mineral binder tempered with water.

## Revendications

1. Utilisation de mélasse modifiée comme dispersant pour des suspensions minérales, une proportion pondérale de particules solides présentant une grosseur de particule < 100 µm dans la suspension minérale étant d'au moins 50% en poids et la mélasse modifiée pouvant être obtenue par un procédé comprenant les étapes consistant à :
a) inverser la mélasse et/ou mettre à disposition une mélasse inversée
b) transformer la mélasse inversée avec des alcalis.

2. Utilisation selon la revendication 1, **caractérisée en ce que** l'inversion de la mélasse dans l'étape a) a lieu de manière enzymatique, en particulier par une invertase.

3. Utilisation selon au moins l'une quelconque des revendications 1-2, **caractérisée en ce que** le traitement alcalin dans l'étape b) a lieu par une base du groupe constitué par Ca(OH)₂, Mg(OH)₂, NaOH, KOH ou des mélanges de ceux-ci, KOH et NaOH étant des bases préférées et NaOH étant tout à fait préféré.

4. Utilisation selon au moins l'une quelconque des revendications 1-3, **caractérisée en ce que** l'étape b) est réalisée à une température de 10°C à 90°C, de préférence de 30°C à 80°C et le plus préférablement de 35°C à 75°C.

5. Utilisation selon au moins l'une quelconque des revendications 1-4, **caractérisée en ce que** dans l'étape b), on maintient une température de 30°C à 80°C, de préférence de 40 °C à 70 °C et le plus préférablement de 55°C à 65°C, et un pH de 6-14, de préférence de 6-12 et le plus préférablement de 7-11 ou 8-10, pendant 0,5 à 5 heures, de préférence pendant 1,5 à 4 heures, le plus préférablement pendant 2 à 3 heures.

6. Utilisation selon au moins l'une quelconque des revendications 1-5, **caractérisée en ce que** la mélasse modifiée est utilisée ensemble avec au moins un fluidifiant, ledit au moins un fluidifiant présentant en particulier une structure selon la formule (I) 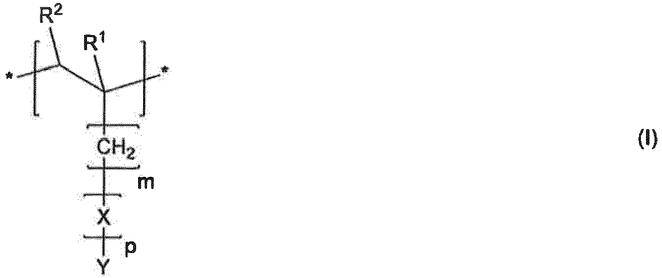 dans laquelle
R¹ représente, à chaque fois indépendamment, H ou un groupe alkyle comprenant 1 à 5 atomes de carbone,
R² représente, à chaque fois indépendamment, H, -COOM ou un groupe alkyle comprenant 1 à 5 atomes de carbone,
M représente, indépendamment, un ion de métal alcalin, un ion de métal alcalino-terreux, un ion métallique divalent ou trivalent, un ion d'ammonium ou un groupe d'ammonium organique,
X représente -COO-, -NH- ou des mélanges de ceux-ci,
m = 0, 1 ou 2,
p = 0 ou 1,
Y représente, à chaque fois indépendamment, H, M, un groupe C₁₋C₂₀₋alkyle, C₁-C₂₀-cycloalkyle, C₁-C₂₀-alkylaryle, C₁-C₂₀-hydroxyalkyle ou un groupe de formule -[AO]ₙ-R^{a}, les groupes mentionnés étant non substitués ou substitués par un groupe sulfone, un groupe sulfate ou un groupe phosphate,
A = C₂-C₄-alkylène, R^{a} représentant H, un groupe C₁-C₂₀-alkyle, C₁-C₂₀-cyclohexyle ou C₁-C₂₀-alkylaryle et n = 1-10.

7. Utilisation selon la revendication 6, **caractérisée en ce que** ledit au moins un fluidifiant comprend un poly(acide (méth)acrylique) et/ou un sel de celui-ci, en particulier du poly(acide acrylique) et/ou un sel de poly(acide acrylique).

8. Utilisation selon au moins l'une quelconque des revendications 1-7, **caractérisée en ce que** la mélasse modifiée, le cas échéant ensemble avec ledit au moins un fluidifiant, est utilisée en une proportion de 0,01-5% en poids, de préférence de 0,1-1% en poids, en particulier de 0,2-0,9% en poids, de préférence de 0,4-0,8% en poids, par rapport à la teneur en solides de la suspension minérale.

9. Utilisation selon au moins l'une quelconque des revendications 1 à 8, **caractérisée en ce qu'**une proportion pondérale de particules solides présentant une grosseur de particule < 100 µm dans la suspension minérale est d'au moins 75% en poids, en particulier d'au moins 90% en poids ou d'au moins 95% en poids et/ou **en ce qu'**une proportion pondérale de particules solides présentant une grosseur de particule > 10 mm dans la suspension minérale est inférieure à 10% en poids, de préférence inférieure à 5% en poids, en particulier inférieure à 1% en poids, à chaque fois par rapport au poids total de tous les solides dans la suspension minérale.

10. Utilisation selon la revendication 7 et 9.

11. Utilisation selon la revendication 9 ou 10, **caractérisée en ce que** la mélasse modifiée, le cas échéant ensemble avec ledit au moins un fluidifiant, est utilisée en une proportion de 0,01-0,8% en poids ou de 0,01-0,6% en poids, par rapport au poids total de la suspension minérale.

12. Utilisation selon au moins l'une quelconque des revendications 1-11, **caractérisée en ce que** la suspension minérale contient un liant minéral, la suspension minérale étant de préférence une composition de mortier ou une composition de béton.

13. Procédé pour la préparation d'une suspension minérale, de la mélasse modifiée, telle qu'elle est décrite dans l'une quelconque des revendications 1-12, et éventuellement un fluidifiant, tel qu'il est décrit dans l'une quelconque des revendications 6 ou 7, étant mélangé(s) avec des particules solides minérales et un liquide, en particulier de l'eau, de manière telle qu'une proportion pondérale de particules solides présentant une grosseur de particule < 100 µm dans la suspension minérale est d'au moins 50% en poids.

14. Suspension minérale pouvant être obtenue par un procédé selon la revendication 13.

15. Corps façonné, pouvant être obtenu par durcissement d'une suspension minérale selon la revendication 14, la suspension minérale contenant un liant minéral gâché à l'eau.
